# DEMANDE DE BREVET EUROPEEN

(11) **EP 1 241 910 A1**
(43) Date de publication de la demande: **18.09.2002**
(21) Numéro de dépôt: 02290646.5
(22) Date de dépôt: 14.03.2002
(51) Int. Cl.: H04Q 7/38

(54) **Procédé pour le contrôle de session d'appel multimedia dans un système cellulaire de radiocommunications mobiles**

(30) Priorité: 16.03.2001 FR 0103638
(71) Demandeur: Evolium S.A.S., 75008 Paris (FR)
(72) Inventeur: Muniere, Vincent, 75015 Paris (FR); Landais, Bruno, 22560 Pleumeur-Bodou (FR)
(74) Mandataire: El Manouni, Josiane

(57) **Abrégé**

Procédé pour le contrôle de session d'appel multimédia dans un système cellulaire de radiocommunications mobiles, ledit procédé comportant :
- une étape de négociation permettant de déterminer les caractéristiques des composantes de ladite session,
- une étape d'allocation de ressources à partir des caractéristiques déterminées dans l'étape de négociation,
ledit procédé étant essentiellement caractérisé en ce que l'étape de négociation comporte elle-même les étapes suivantes:
- au moins une des parties à l'appel est informée des capacités de son réseau d'accès radio serveur, au moins dans sa cellule serveuse,
- il est tenu compte desdites capacités dudit réseau d'accès radio serveur dans ladite négociation, afin de pouvoir allouer des ressources en correspondance.

## Description

La présente invention concerne d'une manière générale les systèmes de radiocommunications mobiles.

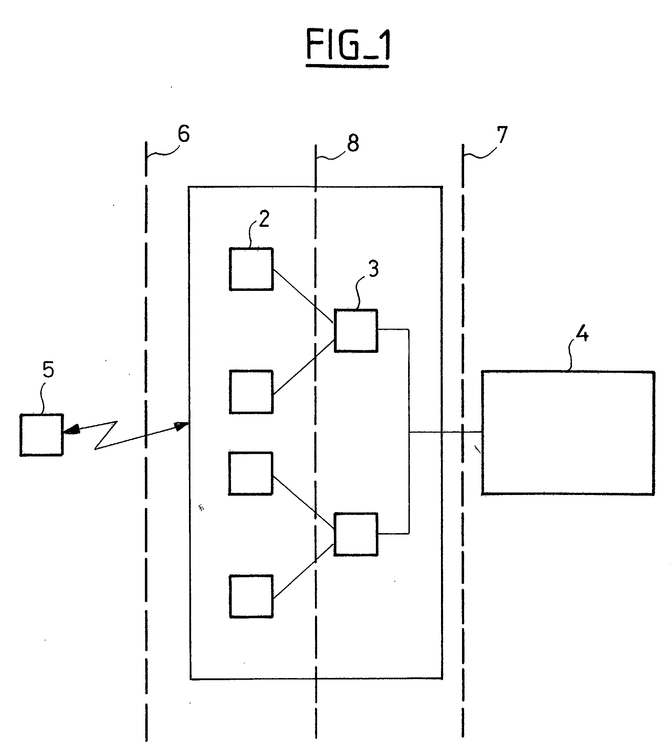

L'architecture de tels systèmes est rappelée sur la figure 1. D'une manière générale un tel système comporte essentiellement :
- un réseau d'accès radio 1 (ou RAN, pour « Radio Access Network » en anglais), formé de stations de base telles que 2 et de contrôleurs de stations de base tels que 3,
- un réseau de coeur 4 (ou CN, pour « Core Network »).

Le réseau d'accès radio 1 est en relation d'une part avec des stations mobiles telles que 5, via une interface 6 appelée aussi interface radio, et d'autre part avec le réseau de coeur via une interface 7. A l'intérieur du réseau d'accès radio, les stations de base communiquent avec les contrôleurs de stations de base via une interface 8.

Le réseau de coeur 4 est en relation d'une part avec le réseau d'accès radio via l'interface 7, et d'autre part avec des réseaux extérieurs, non illustrés spécifiquement.

Dans ces systèmes, les évolutions technologiques conduisent à distinguer des technologies dites de deuxième génération, ou 2G, notamment de type GSM (pour « Global System for Mobile communication »), et des technologies dites de troisième génération, ou 3G, notamment de type UMTS (pour « Universal Mobile Telecommunication System »).

Dans les systèmes de type GSM, le réseau d'accès radio est appelé BSS ("Base Station Subsystem"), les stations de base sont appelées BTS ("Base Transceiver Station"), les contrôleurs de stations de base sont appelés BSC ("Base Station Controller"), et le réseau de coeur est appelé NSS (« Network Sub-System »). Ce dernier contient essentiellement des entités, ou noeuds de réseau, telles que MSC (« Mobile Switching Center »). L'interface radio est appelée interface « Um », l'interface 7 est appelée interface « A », et l'interface 8 est appelée interface « Abis ».

D'une manière générale ces systèmes font l'objet de normalisation, et pour plus d'informations, on pourra se reporter aux normes correspondantes publiées par les organismes de normalisation correspondants.

La normalisation du système GSM a évolué ces dernières années avec l'introduction du GPRS (« General Packet Radio Service ») puis du EDGE (« Enhanced Data rates for GSM Evolution »), le premier permettant d'offrir des services en mode paquet, le deuxième permettant d'offrir des débits plus importants sur l'interface radio. EDGE se décompose en deux améliorations: la première appelée ECSD (« Enhanced Circuit Switched Data ») permet d'accroître les débits en mode circuit. La deuxième appelée EGPRS (« Enhanced GPRS ») permet d'accroître les débits en mode paquet.

Dans les systèmes GPRS et EGPRS l'interface 7 est appelée interface « Gb » et le réseau de coeur contient essentiellement des entités, ou noeuds de réseau, telles que les entités SGSN ("Serving GPRS Support Node"), et GGSN (« Gateway GPRS Support Node »), ces dernières étant elles-mêmes en relation avec des réseaux extérieurs en mode paquet, notamment des réseaux IP (pour « Internet Protocol »).

Un réseau d'accès radio utilisant les technologies d'accès radio GSM/EDGE est aussi appelé GERAN («GSM/EDGE Radio Access Network »).

Dans les systèmes de type UMTS, le réseau d'accès radio est appelé UTRAN ("UMTS Terrestrial Radio Access Network »), les stations de base sont appelées « Node B », les contrôleurs de stations de base sont appelés RNC ("Radio Network Controller"), et les stations mobiles sont appelées UE (« User Equipment »). L'interface radio est appelé « interface Uu », l'interface 7 est appelée interface « lu », l'interface 8 est appelée interface « lub », et une interface entre RNCs est en outre introduite, appelée interface « lur ». L'interface « lu » est elle-même formée de deux interfaces, l'une appelé « lu-cs » (où « cs » est utilisé pour « circuit-switching » en anglais), et l'autre appelée « lu-ps » (où « ps » est utilisé pour « packet-switching » en anglais).

Dans les systèmes de type UMTS, le réseau de coeur contient essentiellement des entités ou noeuds de réseau, de type 3G-MSC, 3G-SGSN, 3G-GGSN (les entités MSC, SGSN, GGSN mentionnées précédemment pour les systèmes 2G étant aussi appelées 2G-MSC, 2G-SGSN, 2G-GGSN). L'interface « lu-cs » relie l'UTRAN au 3G-MSC, et l'interface « lu-ps » relie l'UTRAN au 3G-SGSN.

Le réseau d'accès du système UMTS diffère essentiellement de celui des systèmes GSM, GPRS et EDGE par l'introduction de technologies d'accès radio plus performantes, basées notamment sur l'utilisation de technique d'accès multiple de type W-CDMA (« Wideband- Code Division Multiple Access »). Le réseau de coeur du système UMTS permet d'offrir des services de type multimédia et à haut débit.

D'une manière générale le système UMTS fait également l'objet de normalisation, et pour plus d'informations, on pourra se reporter aux normes correspondantes, publiées par les organismes de normalisation correspondants.

Un système GSM/GPRS tel que rappelé précédemment fonctionne suivant un mode appelé aussi mode « A/Gb ».

Dans un but d'harmoniser les services offerts via les technologies d'accès radio de type UMTS et GSM/EDGE, un nouveau mode a maintenant été introduit, appelé mode « lu », permettant de connecter directement un réseau d'accès radio de type GERAN, à des noeuds de réseau de coeur de type 3G-MSC ou 3G-SGSN.

En mode « lu », des services en temps réel seront d'abord offerts via l'interface « lu-cs », qui connecte un GERAN à un 3G-MSC. Dans ce premier temps, l'interface « lu-ps », qui connecte un GERAN à un 3G-SGSN, fournira uniquement des services non temps réel. Ensuite, des services en temps réel seront aussi supportés sur l'interface « lu-ps ».

Une nouvelle architecture de coeur de réseau a donc été définie, de sorte que des services temps réel aussi bien que des services non-temps réel puissent être offerts via une interface orientée paquet telle que l'interface « lu-ps ». Une telle architecture est aussi appelé IM SS (« IP Multimedia Sub-System »). Des services multimédia peuvent alors être offerts via un point de référence unique avec une signalisation relative au contrôle de session d'appel transportée via un protocole appelé SIP (« Session Initiation Protocol »).

Une telle signalisation relative au contrôle de session d'appel multimédia a jusqu'à présent été définie pour des technologies de type UMTS. Une telle signalisation comporte ainsi typiquement l'établissement d'une connexion RRC entre une station mobile et un RAN, suivi de l'établissement d'une porteuse UMTS pour transporter la signalisation relative au protocole SIP. Le protocole RRC, pour « Radio Resource Control » est défini dans la norme 3G TS 25.331. Le protocole SIP ainsi que le protocole SDP (« Session Description Protocol ») qui lui est lié ont été définis par l'IETF (« Internet Engineering Task Force ») qui est l'organisme de normalisation pour le protocole Internet, ou IP (pour « Internet Protocol »).

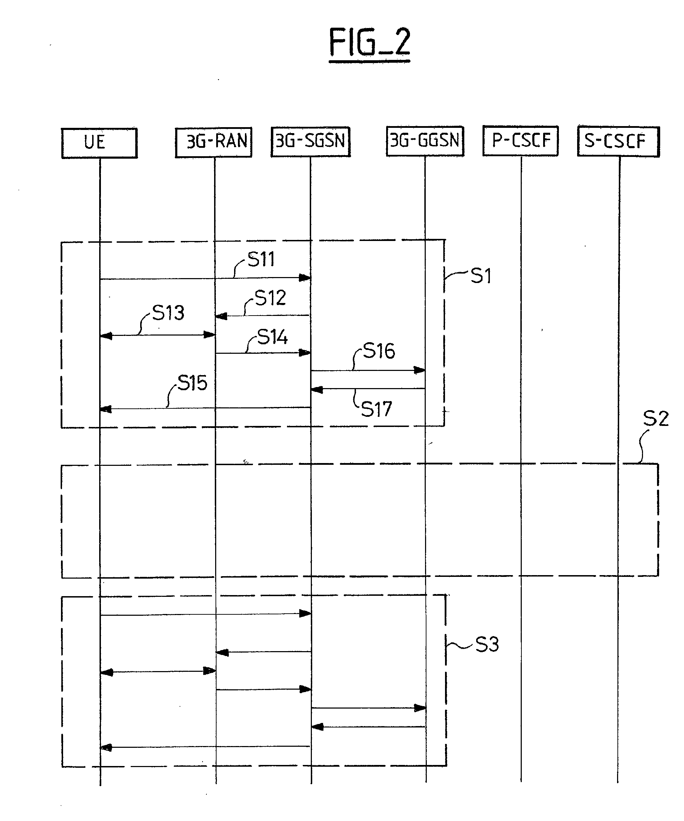

Les principales étapes d'une telle signalisation sont rappelées sur la figure 2. Pour simplifier, la figure 2 ne représente qu'un des trois segments en lesquels se décompose le contrôle de session d'appel, en l'occurrence le segment qui va de l'UE appelant à son S-CSCF, les deux autres segments étant le segment qui va de l'UE appelé à son S-CSCF, et le segment qui relie les S-CSCF de l'UE appelant et de l'UE appelé. On rappelle que les entités S-CSCF (« Serving-Call Session Control Function ») et P-CSCF (« Proxy-Call Session Control Function ») sont des entités du réseau de coeur, en charge du contrôle de sessions d'appels multimédia.

On notera que dans toute la description, le terme UE est utilisé à titre d'exemple, étant entendu qu'il peut s'agir de toute station mobile (UMTS et/ou GERAN).

L'étape S1 correspond essentiellement à une étape préliminaire à l'établissement de session.

L'étape S1 utilise une procédure dite d'activation de contexte de protocole de données en mode paquet, ou contexte PDP (ou « PDP Context», pour « Packet Data Protocol Context»), nécessaire au transport de signalisation de contrôle de session multimédia. On rappelle qu'un contexte PDP comporte un ensemble de paramètres de porteuse UMTS, tels que notamment des paramètres de qualité de service, ou QoS (pour « Quality of Service»), ...etc. Cette étape sera suivie ultérieurement d'une autre procédure d'activation de contexte PDP, nécessaire au transport des données liées à la session multimédia elle-même. Ces deux contextes PDP concernant la même adresse IP, l'étape S1 sera aussi appelée procédure d'activation de contexte PDP primaire.

L'étape S1 comporte elle-même essentiellement les étapes suivantes. Dans une étape S11, une requête d'activation de contexte PDP est transmise de l'UE au RAN, avec les paramètres correspondants de qualité de service de bout en bout (ou « end-to-end QoS ») pour la porteuse UMTS de signalisation de niveau SIP. Dans une étape S12, le 3G-SGSN commande l'établissement d'une porteuse d'accès radio (ou RAB, ou « Radio Access Bearer ») de sorte qu'un support soit disponible entre UE et 3G-SGSN, répondant aux contraintes de qualité de service. Lorsque le RAN reçoit une telle requête, après un contrôle d'admission d'appel, il établit une porteuse radio (ou RB, ou « Radio Bearer ») sur l'interface radio (étape S13) et une porteuse lu (ou « lu bearer ») sur l'interface « lu ». L'établissement du RAB peut alors être confirmé (étape S14) et le contexte PDP activé (étape S15), après négociation avec le 3G-GGSN (étape S16, S17).

L'étape S2 correspond essentiellement à l'établissement de la session multimédia au niveau du protocole SIP. Cette étape inclut une négociation permettant de déterminer les caractéristiques pour la session en cours d'établissement. Cette négociation inclut notamment une négociation de codecs, permettant de déterminer une liste ou ensemble de codecs capables d'être supportés en commun par les deux parties à l'appel et autorisés par tous les noeuds de réseau intermédiaires, pour cette session.

On rappelle que les codecs déterminent, aussi bien dans les stations mobiles que dans le réseau d'accès radio (notamment dans les stations de base) ainsi que dans le coeur de réseau, comment réaliser le codage source et le codage canal nécessaires notamment à la transmission sur l'interface radio. Par exemple, pour le codage de parole, dans un système de type GSM, il existe différents types de codecs: plein débit (ou FR, pour "Full Rate"), plein débit amélioré (ou EFR, pour "Enhanced Full Rate"), demi-débit (ou HR, pour "Half Rate"), ou encore AMR (pour "Adaptive Multi-Rate coding"), ce dernier étant particulièrement intéressant en ce qu'il permet d'optimiser la qualité de service (en l'occurrence en sélectionnant à chaque instant, en fonction des conditions de transmission rencontrées, une combinaison optimale d'un codage source donné et d'un codage canal donné). Deux types de codec AMR existent : le codec à bande étroite « Narrowband AMR » et le codec à bande large « Wideband AMR ». Un codec de type « Wideband AMR » offre une qualité de service encore meilleure mais nécessite des débits radio plus importants. Le cas de parole n'est bien sûr qu'un exemple des différentes composantes, ou différents flux de média, formant une session multimédia.

L'étape S2 n'a pas été illustrée de manière détaillée sur la figure 2, mais pour plus d'informations on pourra se référer à la norme 3G TS 23.228. L'étape S2 comporte essentiellement les étapes suivantes. Une fois qu'un RB a été établi pour la signalisation SIP (au moyen de l'étape précédente S1), une première tâche consiste pour le client SIP à découvrir son P-CSCF. Ensuite, il devra se déclarer et s'enregistrer auprès de son S-CSCF, ce qui fera appel à d'autres entités de coeur de réseau. Enfin, lors d'un établissement de session, une requête appelée « SIP Invite » est envoyée à la partie appelée via les entités P-CSCF et S-CSCF. Ce message contient un datagramme SDP qui indique pour chaque flux de média que l'UE appelant souhaite établir, un certain nombre de paramètres de média tels que : type de média, combinaison d'attributs de QoS, liste de codecs capables d'être supportés pour cette session, ...etc. Les entités P-CSCF et S-CSCF associées à la partie appelante puis à la partie appelée effectuent alors un contrôle de service (selon des critères propres au réseau) sur ces paramètres. La partie appelée détermine alors entre autre sa propre liste de codecs capables d'être supportés pour cette session, puis une liste de codecs capables d'être supportés en commun par les deux parties, appelante et appelée, et retourne alors cette dernière liste à la partie appelante. La partie appelante détermine alors quels flux de média devraient être utilisés pour cette session, et quels codecs, dans cette liste, devraient être utilisés pour cette session.

L'étape S3 correspond essentiellement à une fin d'établissement de session, et comporte une étape d'allocation de ressource, à partir des caractéristiques de flux de média (en terme d'attributs de QoS, de codec négocié, etc) ainsi déterminées dans l'étape S2.

L'étape S3 utilise aussi une procédure d'activation de contexte PDP, appelée aussi procédure d'activation de contexte PDP secondaire (pour la distinguer de la procédure d'activation de contexte primaire utilisée dans l'étape S1). L'étape S3 est semblable à l'étape S1, à ceci près que les paramètres de porteuse UMTS à établir correspondent maintenant aux besoins déterminés dans l'étape S2. L'étape S3 comporte elle-même des étapes qui sont semblables à celles de la l'étape S1, et qui pour cette raison ne seront pas re-décrites.

L'étape S3 comporte ainsi l'établissement d'un RAB pour ce contexte PDP secondaire. Lorsque ce RAB est établi, le RAN effectue un contrôle d'admission et accepte ou rejette l'appel.

Dans le cas de l'UTRAN, cette requête RAB devrait être acceptée puisque tous les types de codecs (ou modes) devraient être supportés par le Node B, ou plus généralement par le RNS qui contient ce Node B (le RNS étant un sous-réseau à l'intérieur de l'UTRAN, formé d'un RNC et d'un ou plusieurs Node B contrôlés par ce RNC). Le seul cas où une telle requête serait rejetée correspond à un cas de congestion (aucune ressource n'étant alors disponible).

Dans le cas du GERAN notamment, un problème se pose, qui est dû au fait que toutes les BTS peuvent ne pas supporter tous les types de codecs. Par exemple, pour le cas de flux de média constitué par de la parole, toutes les BTS peuvent ne pas supporter les codecs de type « Wideband AMR ». Ainsi, lorsque deux clients SIP négocient un codec pour un flux de média donné, mais que ce codec n'est pas supporté par la BTS (ou plus généralement par le sous-ensemble du BSS qui contient cette BTS), l'activation du contexte de protocole PDP va échouer. Ceci va nécessiter une re-négociation de SIP, ce qui retarde l'établissement de l'appel d'une manière qui peut être non acceptable.

Une solution serait d'inverser les procédures de négociation SIP et d'activation de contexte de protocole PDP secondaire. Cependant une telle solution n'est pas possible car elle n'est pas compatible avec la norme.

La présente invention a notamment pour but d'éviter ces divers inconvénients.

Un des objets de la présente invention est ainsi un procédé pour le contrôle de session d'appel multimédia dans un système cellulaire de radiocommunications mobiles, ledit procédé comportant :
- une étape de négociation permettant de déterminer les caractéristiques des composantes de ladite session,
- une étape d'allocation de ressources à partir des caractéristiques déterminées dans l'étape de négociation,
ledit procédé étant essentiellement caractérisé en ce que l'étape de négociation comporte elle-même les étapes suivantes:
- au moins une des parties à l'appel est informée des capacités de son réseau d'accès radio serveur, au moins dans sa cellule serveuse,
- il est tenu compte desdites capacités dudit réseau d'accès radio serveur dans ladite négociation, afin de pouvoir allouer des ressources en correspondance.

Suivant une autre caractéristique, ladite étape de négociation inclut elle-même une étape permettant de déterminer des paramètres de média capables d'être supportés en commun par chacune des parties à l'appel, pour ladite session.

Suivant une autre caractéristique, ladite étape de négociation inclut elle-même une étape permettant de déterminer, à partir d'une liste de codecs capables d'être supportés séparément par chacune des parties à l'appel, pour ladite session, une liste de codecs capables d'être supportés en commun par chacune des parties à l'appel, pour ladite session.

Suivant une autre caractéristique, chacune ou l'une des parties à l'appel tient compte de ses propres capacités et desdites capacités du réseau d'accès radio serveur, pour déterminer une liste de codecs qu'elle est capable de supporter, pour ladite session.

Suivant une autre caractéristique, ladite information sur les capacités du réseau d'accès radio serveur est transmise dans un canal de diffusion.

Suivant une autre caractéristique, ledit canal de diffusion est le canal BCCH (« Broadcast Control Channel ») ou PBCCH (« Packet Broadcast Control Channel »), dans un système de type GERAN ; ledit canal de diffusion est le canal de transport BCH (« Broadcast Channel ») dans un système de type UTRAN.

Suivant une autre caractéristique, ladite information sur les capacités du réseau d'accès radio serveur est transmise dans un canal de contrôle commun.

Suivant une autre caractéristique, ledit canal de contrôle commun est le canal PCCCH (« Packet Common Control Channel »), dans un système de type GERAN ; ledit canal de contrôle commun est le canal de transport PCH (« Paging Channel ») ou FACH (« Forward Access Channel ») dans un système de type UTRAN.

Suivant une autre caractéristique, ladite information sur les capacités du réseau d'accès radio serveur est transmise dans un message de signalisation dédié.

Suivant une autre caractéristique, ledit message de signalisation dédié est tout message du protocole RRC (« Radio Resource Control ») émis dans le sens de la liaison descendante. Le protocole RRC est défini dans la norme 3G TS 25.331 en UTRAN et dans la norme 3G TS 44.018 en GERAN. Par exemple, le message « RRC CONNECTION SETUP », le message « RADIO BEARER SETUP », le message « DOWNLINK DIRECT TRANSFER », le message « RADIO BEARER RECONFIGURATION », le message « CELL UPDATE CONFIRM / URA UPDATE CONFIRM », le message « HANDOVER COMMAND» peuvent être utilisés.

Un autre objet de la présente invention est un système de radiocommunications mobiles comportant des moyens pour mettre en oeuvre un tel procédé.

Un autre objet de la présente invention est un équipment de réseau d'accès de radiocommunications mobiles (notamment de réseau d'accès) comportant des moyens pour mettre en oeuvre un tel procédé.

Un autre objet de la présente invention est une station mobile comportant des moyens pour mettre en oeuvre un tel procédé.

D'autres objets et caractéristiques de la présente invention apparaîtront à la lecture de la description suivante d'un exemple de réalisation, faite en relation avec les dessins ci-annexés dans lesquels:
- la figure 1 est un schéma destiné à rappeler l'architecture générale d'un système de radiocommunications mobiles,
- la figure 2 est un schéma destiné à illustrer un procédé de contrôle de session d'appel multimédia, selon l'art antérieur,
- la figure 3 est un schéma destiné à illustrer un procédé de contrôle de session d'appel multimédia, selon l'invention.

La présente invention a donc pour objet un procédé pour le contrôle de session d'appel multimédia dans un système cellulaire de radiocommunications mobiles, ledit procédé comportant :
- une étape de négociation permettant de déterminer les caractéristiques des composantes de ladite session,
- une étape d'allocation de ressources à partir des caractéristiques déterminées dans l'étape de négociation.
Essentiellement, suivant l'invention, l'étape de négociation comporte elle-même les étapes suivantes:
- au moins une des parties à l'appel est informée des capacités de son réseau d'accès radio serveur, au moins dans sa cellule serveuse,
- il est tenu compte desdites capacités dudit réseau d'accès radio serveur dans ladite négociation, afin de pouvoir allouer des ressources en correspondance.

Notamment, ladite étape de négociation inclut elle-même une étape permettant de déterminer des paramètres de média capables d'être supportés en commun par chacune des parties à l'appel, pour ladite session.

Notamment, ladite étape de négociation inclut elle-même une étape permettant de déterminer, à partir d'une liste de codecs capables d'être supportés séparément par chacune des parties à l'appel, pour ladite session, une liste de codecs capables d'être supportés en commun par chacune des parties à l'appel, pour ladite session.

Notamment, chacune ou l'une des parties à l'appel tient compte de ses propres capacités et desdites capacités du réseau d'accès radio serveur, pour déterminer une liste de codecs qu'elle est capable de supporter, pour ladite session.

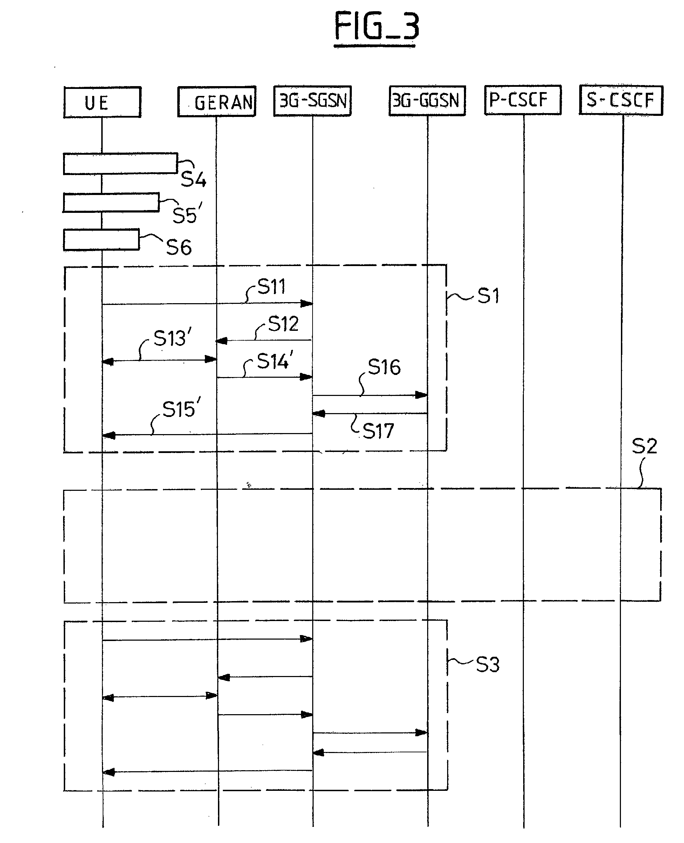

Différents modes de réalisation sont maintenant décrits, à titre d'exemple. Ils sont illustrés sur la figure 3, qui reprend par ailleurs les étapes de la figure 2, en indiquant seulement les modifications apportées par rapport à cette figure, en l'occurrence en indiquant avec un symbole « ' » les étapes qui pourraient être concernées par l'introduction de l'invention, suivant ses différents modes de réalisation possibles.

Sur la figure 3 on a en outre illustré une étape initiale S4 où l'UE est en mode veille (ou « idle mode »), et effectue les tâches habituelles de lecture d'informations système diffusées sur des canaux de diffusion (tels que BCCH, pour « Broadcast Control Channel » ou PBCCH, pour « Packet Broadcast Control Channel » ou « BCH », pour « Broadcast Channel »), sélection de réseau ou PLMN (« Public Land Mobile Network ») serveur, sélection de cellule serveuse, ...etc .

L'étape S5 correspond au passage de l'UE en mode RRC connecté, ce qui correspond à l'établissement d'une connexion RRC.

L'étape S6 correspond à une procédure dite de « GPRS Attach », telle que définie dans la norme 3G TS 24.008.

Suivant un mode de réalisation, ladite information sur les capacités du réseau d'accès radio serveur est transmise dans un canal de diffusion.

Par exemple, dans le système GSM, ladite information peut être transmise sur le canal BCCH (« Broadcast Control Channel ») ou PBCCH (« Packet Broadcast Control Channel »). Puisque la station mobile doit lire les informations reçues sur un tel canal (ceci faisant en effet partie des étapes effectuées par la station mobile dans l'étape S4) avant d'émettre ou de recevoir un appel, il peut ainsi être tenu compte de ces capacités du réseau d'accès radio, dans la négociation SIP.

Suivant un autre mode de réalisation, ladite information sur les capacités du réseau d'accès radio serveur est transmise dans un canal de contrôle commun.

Par exemple, dans le système GSM, ladite information peut être transmise sur le canal PCCCH (« Packet Common Control Channel »). Les canaux PCCCH incluent en effet une partie dite de distribution au début de chaque message, qui pourrait être utilisée pour transmettre ladite information.

Suivant un autre mode de réalisation, ladite information sur les capacités du réseau d'accès radio serveur est transmise dans un message de signalisation dédié.

Différents exemples sont maintenant décrits, pour la transmission de ladite information dans un message de signalisation dédié, la liste de ces exemples n'étant évidemment pas limitative. Tout message RRC envoyé sur la liaison descendante peut être utilisé notamment pour la transmission de ladite information.

Suivant un exemple, ledit message de signalisation dédié est le message « RRC CONNECTION SETUP » reçu du GERAN lorsqu'une connexion RRC est établie. L'établissement d'une connexion RRC (étape S5') est en effet requis avant d'effectuer une procédure de « GPRS Attach » (étape S6 ), ou d'envoyer une requête d'activation de contexte PDP au SGSN pour activer le contexte PDP primaire .

Suivant un autre exemple, ledit message de signalisation dédié est le message « RADIO BEARER SETUP » reçu du GERAN lorsqu'une porteuse radio RB est établie (étape S13' ). L'établissement d'un RB est en effet requis avant la signalisation SIP.

Suivant un autre exemple, ledit message de signalisation dédié est le message « DOWNLINK DIRECT TRANSFER » reçu du GERAN. Ce message est en effet transmis lors de l'activation du contexte PDP primaire (étape S15' ). Ce message est donc également requis avant la signalisation SIP.

Suivant un autre exemple, ledit message de signalisation dédié est le message « RADIO BEARER RECONFIGURATION » qui pourrait être utilisé notamment pour indiquer un changement dans lesdites capacités du réseau d'accès radio serveur et/ou un changement dans la ou les porteuse(s) radio RB établie(s) pour la ou les composantes de la session multimédia.

Suivant un autre exemple, ledit message de signalisation dédié est le message « CELL UPDATE CONFIRM / URA UPDATE CONFIRM », qui pourrait être utilisé notamment lorsqu'un utilisateur change de cellule serveuse, alors qu'une connexion RRC existe, mais qu'il n'a pas de canal dédié alloué. Dans ce cas, une re-négociation SIP pourrait être déclenchée, suivie d'une modification de contexte PDP secondaire impliquant une reconfiguration de RB, bien que ceci ne soit pas systématique.

Suivant un autre exemple, ledit message de signalisation dédié est le message « HANDOVER COMMAND », qui pourrait être utilisé notamment lorsqu'un utilisateur change de cellule serveuse, alors qu'il a un canal dédié alloué. Dans ce cas, si le codec qui était utilisé dans l'ancienne cellule n'est plus supporté par la nouvelle cellule, une re-négociation de codec au niveau SIP peut être déclenchée, éventuellement suivie d'une modification de contexte PDP secondaire impliquant une reconfiguration de RB.

Ladite information sur les capacités dudit réseau d'accès radio serveur pourrait par exemple être considérée comme un élément d'information (ou IE, pour « Information Element ») au sens du protocole RRC. Cet élément d'information serait alors indiqué dans le message RRC considéré. Cet élément d'information pourrait être appelé par exemple « GERAN Information Element » et l'information indiquée pourrait être appelée par exemple « Supported Codecs ».

Ladite information sur les capacités dudit réseau d'accès radio serveur pourrait par ailleurs concerner non seulement la cellule serveuse, mais aussi des cellules voisines.

En outre, l'invention ne s'applique pas seulement au paramètre de média particulier que constitue la liste de codecs supportés, mais à tout type de paramètre.

Par ailleurs, bien que décrite plus particulièrement ci-dessus dans le cadre de l'application au GERAN, l'invention peut s'appliquer à tout réseau, incluant les réseaux de type UMTS.

La présente invention a également pour objet, outre un tel procédé, un système cellulaire de radiocommunications mobiles, un réseau cellulaire de radiocommunications mobiles ou un équipement de réseau cellulaire de radiocommunications mobiles, et une station mobile, comportant des moyens de mise en oeuvre d'un tel procédé.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

## Revendications

1. Procédé pour le contrôle de session d'appel multimédia dans un système cellulaire de radiocommunications mobiles, ledit procédé comportant :
- une étape de négociation permettant de déterminer les caractéristiques des composantes de ladite session,
- une étape d'allocation de ressources à partir des caractéristiques déterminées dans l'étape de négociation,
ledit procédé étant **caractérisé en ce que** l'étape de négociation comporte elle-même les étapes suivantes:
- au moins une des parties à l'appel est informée des capacités de son réseau d'accès radio serveur, au moins dans sa cellule serveuse,
- il est tenu compte des capacités dudit réseau d'accès radio serveur dans ladite négociation, afin de pouvoir allouer des ressources en correspondance.

2. Procédé selon la revendication 1, **caractérisé en ce que** ladite étape de négociation inclut elle-même une étape permettant de déterminer des paramètres de média capables d'être supportés en commun par chacune des parties à l'appel, pour ladite session.

3. Procédé selon l'une des revendications 1 et 2, **caractérisé en ce que** ladite étape de négociation inclut elle-même une étape permettant de déterminer, à partir d'une liste de codecs capables d'être supportés séparément par chacune des parties à l'appel, pour ladite session, une liste de codecs capables d'être supportés en commun par chacune des parties à l'appel, pour ladite session.

4. Procédé selon l'une des revendications 1 à 3, **caractérisé en ce que**, chacune ou l'une des parties à l'appel tient compte de ses propres capacités et desdites capacités du réseau d'accès radio serveur, pour déterminer une liste de codecs qu'elle est capable de supporter, pour ladite session.

5. Procédé selon l'une des revendications 1 à 4, **caractérisé en ce que** ladite information sur les capacités du réseau d'accès radio serveur est transmise sur un canal de diffusion.

6. Procédé selon la revendication 5, **caractérisé en ce que** ledit canal de diffusion est le canal BCCH (« Broadcast Control Channel ») ou PBCCH (« Packet Broadcast Control Channel »), dans un système de type GSM/GPRS.

7. Procédé selon la revendication 5, **caractérisé en ce que** ledit canal de diffusion est le canal BCH (« Broadcast Channel ») dans un système de type UMTS.

8. Procédé selon l'une des revendications 1 à 4, **caractérisé en ce que** ladite information sur les capacités du réseau d'accès radio serveur est transmise sur un canal de contrôle commun.

9. Procédé selon la revendication 8, **caractérisé en ce que** ledit canal de contrôle commun est le canal PCCH (« Packet Common Control Channel »), dans un système de type GSM/GPRS.

10. Procédé selon l'une des revendications 1 à 4, **caractérisé en ce que** ladite information sur les capacités du réseau d'accès radio serveur est transmise dans un message de signalisation dédié.

11. Procédé selon la revendication 10, **caractérisé en ce que** ledit message de signalisation dédié est le message « RRC CONNECTION SETUP » défini selon un protocole de type RRC (« Radio Resource Control»).

12. Procédé selon la revendication 10, **caractérisé en ce que** ledit message de signalisation dédié est le message « RADIO BEARER SETUP » défini selon un protocole de type RRC (« Radio Resource Control»).

13. Procédé selon la revendication 10, **caractérisé en ce que** ledit message de signalisation dédié est le message « DOWNLINK DIRECT TRANSFER » défini selon un protocole de type RRC (« Radio Resource Control»).

14. Procédé selon la revendication 10, **caractérisé en ce que** ledit message de signalisation dédié est le message « RADIO BEARER RECONFIGURATION » défini selon un protocole de type RRC (« Radio Resource Control»).

15. Procédé selon la revendication 10, **caractérisé en ce que** ledit message de signalisation dédié est le message « CELL UPDATE CONFIRM / URA UPDATE CONFIRM » défini selon un protocole de type RRC (« Radio Resource Control»).

16. Procédé selon la revendication 10, **caractérisé en ce que** ledit message de signalisation dédié est le message « HANDOVER COMMAND» défini selon un protocole de type RRC (« Radio Resource Control»).

17. Système de radiocommunications mobiles comportant des moyens pour mettre en oeuvre un procédé selon l'une des revendications 1 à 16.

18. Equipement de réseau de radiocommunications mobiles comportant des moyens pour mettre en oeuvre un procédé selon l'une des revendications 1 à 16.

19. Station mobile comportant des moyens pour mettre en oeuvre un procédé selon l'une des revendications 1 à 16.
